# EUROPEAN PATENT SPECIFICATION

(11) **EP 3 364 224 B1**
(45) Date of publication and mention of the grant of the patent: **21.07.2021**
(21) Application number: 15906207.4
(22) Date of filing: 16.10.2015
(51) Int. Cl.: G02B 7/04, F16H 25/20, F16H 25/24, F16C 29/04

(54) **LINEAR DRIVE DEVICE**
LINEARANTRIEBSVORRICHTUNG
DISPOSITIF D'ENTRAÎNEMENT LINÉAIRE

(43) Date of publication of application: 22.08.2018
(73) Proprietor: Nidec Sankyo CMI Corporation, Shizuoka 410-1116 (JP)
(72) Inventor: OKAWA, Takanori, Susono-city Shizuoka 410-1116 (JP); HATASAKO, Hiroyuki, Susono-city Shizuoka 410-1116 (JP)
(74) Representative: Rings, Rolf
(86) International application number: PCT/JP2015/005228
(87) International publication number: WO 2017/064742

(56) References cited:
- WO-A1-2010/122841
- JP-A- H0 772 364
- JP-A- H1 047 451
- JP-A- 2004 347 099
- JP-A- 2005 325 944
- JP-A- 2008 210 442
- JP-A- 2015 087 699

## Description

### Technical Field

The present invention relates to a linear drive device that linearly moves a slider through operation of a motor.

### Background Art

A linear drive device of this type including: a motor such as a step motor; a lead screw (feed screw) rotationally driven by the motor; a guide shaft disposed in parallel to the lead screw; a base (case) supporting the lead screw and the guide shaft; and a slider that includes a guide hole through which the guide shaft penetrates and a nut to which the lead screw is screwed, and linearly moves along an axis direction of the lead screw through rotation of the lead screw while being prevented from rotating by the guide shaft, is disclosed in, for example, Patent Literature 1.

WO 2010/122841 A1 discloses a mirror-lens barrel 1 which has a housing 11, a lid member 12, a motor 21, lead screw member 23, guide shaft 25, a female screw member 32, and a compression spring 33. The lens frame 31 is moved along the guide shaft 25 by rotation of the lead screw member 23 through the female screw-thread member 32.

JP H07-72364 A discloses a lens barrel, wherein: a moving ring 12 holding a focusing lens 4 receives rotational drive for a feed screw 10 by a stepping motor 9 as driving force in the optical axis direction via a rack 11 and moves in the direction of the optical axis, thereby performing focus adjustment of an entire lens system, wherein a projection section 23a is provided for regulating a possible backlash in a rotation restriction direction.

### Citation List

### Patent Literature

Patent Literature 1: Japanese Patent Laid-Open No. 2009-127742

### Summary of Invention

### Technical Problem

Incidentally, in a linear drive mechanism of this type, backlash may occur in movement of the slider due to a clearance between the lead screw and the nut or a clearance between the guide shaft and the guide hole.

The present invention is made in consideration of the above-described circumstances, and an object of the present invention is to provide a linear drive device that makes it possible to surely prevent occurrence of backlash in a slider.

### Solution to Problem

This problem is solved by means of a linear drive device according to claim 1.

To solve the above-described issues, a linear drive device according to the invention includes: a lead screw that is rotationally driven by a motor; a guide shaft that is disposed in parallel to the lead screw at a position eccentric from the lead screw; a base that includes a traveling surface parallel to an axis direction of the lead screw and the guide shaft, and supports the lead screw and the guide shaft; and a slider that includes a guide hole through which the guide shaft penetrates and a nut to which the lead screw is screwed, and linearly moves along the axis direction of the lead screw and the guide shaft by being guided by the guide shaft in a movement direction through rotation of the lead screw around the axis while being prevented from rotating around the axis of the lead screw. The slider includes biasing means and a rolling element. The biasing means applies biasing torque along a circumferential direction with the lead screw or the guide shaft as a center. The rolling element is disposed between the traveling surface of the base and the slider to be traveling along a surface direction of the traveling surface, transmits, to the traveling surface, the biasing torque applied by the biasing means to the slider, and receives reactive force of the biasing torque.

In the invention, in the linear drive device according to claim 1, the slider is divided into a slider body and a movable member, the slider body includes the nut to which the lead screw is screwed and the guide hole through which the guide shaft penetrates, and the movable member is relatively displaceable in the circumferential direction or in a tangential direction of the circumference with respect to the slider body. Further, a first preload spring in a compressed state is interposed between the slider body and the movable member, as the biasing means biasing the slider body and the movable member in a separating direction, and the rolling element is mounted on each of the slider body and the movable member.

In the invention, in the linear drive device, a cylinder is provided on one of the slider body and the movable member, a piston is provided on the other of the slider body and the movable member, the piston is assembled to the cylinder to be slidable in the tangential direction, and the first preload spring is interposed between the cylinder and the piston.

In the invention disclosed in claim 2, in the linear drive device according to claim 1, the nut includes two split nuts that are split in the axis direction, and a second preload spring is provided to apply, to one or both of the split nuts, preload to adjust an axis direction distance between the two split nuts.

### Advantageous Effects of Invention

According to the invention disclosed in any of claims 1 to 2, it is possible to suppress backlash of the slider at the clearance of the engaging portion between the lead screw and the nut and at the clearance between the guide shaft and the guide hole in the plane orthogonal to the axis direction of the lead screw and the guide shaft. For example, when the direction perpendicular to the traveling surface in the plane perpendicular to the axis direction of the lead screw and the guide shaft is X direction, and the direction parallel to the traveling surface in that plane is Y direction, the reactive force that acts on the rolling element from the traveling surface against the rotational biasing force applied to the slider is directed in the X direction perpendicular to the traveling surface. This is because the rolling element freely travels on the traveling surface to guide a movement of the slider, which causes only the reactive force in the direction perpendicular to the traveling force to act on the rolling element. Accordingly, the backlash in the X direction at the engaging portion between the lead screw and the nut and the backlash in the X direction between the guide shaft and the guide hole are suppressed by the reactive force in the X direction.

Next, the reactive force that acts on the slider from the lead screw or the guide shaft against the rotational biasing force applied to the slider is directed in the direction having at least a force component of the Y direction when the line segment connecting the center of the lead screw and the center of the guide shaft is inclined from or perpendicular to the traveling surface along the Y direction (that is, not parallel to the Y direction). Therefore, the backlash in the Y direction at the engaging part between the lead screw and the nut and the backlash in the Y direction between the guide shaft and the guide hole are suppressed by the force component of the Y direction. In other words, the slider receives reactive force against the rotational biasing force in both of the X direction and the Y direction. This makes it possible to suppress the backlash of the slider (the backlash in the radial direction) in the X-Y plane (the plane perpendicular to the axis direction of the lead screw and the guide shaft).

In addition, according to the invention disclosed in claim 2, it is possible to apply, between the slider body and the movable member, the rotational biasing force along the circumferential direction with the lead screw or the guide shaft as a center by the first preload spring interposed between the slider body and the movable member. In addition, it is possible to depress, by the rotational biasing force, the rolling element mounted on each of the slider body and the movable member to the traveling surface of the base. This makes it possible to transmit, to the slider, the reactive force in the direction perpendicular to the traveling surface that is received by the rolling element from the traveling surface.

Furthermore, according to the invention, it is possible to easily apply, between the slider body and the movable member, the rotational biasing force along the circumferential direction with the lead screw or the guide shaft as the center by the first preload spring interposed between the cylinder and the piston.

Moreover, according to the invention, it is possible to suppress the backlash at the clearance of the engaging part between the lead screw and the nut (the backlash between the male screw and the female screw) in the axis direction of the lead screw and the guide shaft. For example, when the direction perpendicular to the X direction and the Y direction is referred to as the Z direction, the second preload spring applies preload in the Z direction (axis direction) between the two split nuts, which makes it possible to slightly move the two split nuts relatively in a separating direction or a closing direction. This makes it possible to absorb the clearance in the Z direction between the male screw of the lead screw and the female screw of the nut, and to accordingly suppress the backlash in the Z direction (the backlash in a thrust direction) that is the axis direction of the lead screw.

### Brief Description of Drawings

[Figure 1] Figure 1 is an appearance perspective view of a linear drive device according to an embodiment of the present invention.
[Figure 2A] Figure 2A is a cross-sectional diagram taken along a plane perpendicular to an axis direction of the linear drive device according to the embodiment of the present invention.
[Figure 2B] Figure 2B is an enlarged view of a circle IIb in Figure 2A.
[Figure 3A] Figure 3A is a vertical cross-sectional diagram at a position of a lead screw of the linear drive device according to the embodiment of the present invention.
[Figure 3B] Figure 3B is an enlarged view of a circle IIIb in Figure 3A.

### Description of Embodiment

An embodiment of the present invention is described below with reference to the drawings.

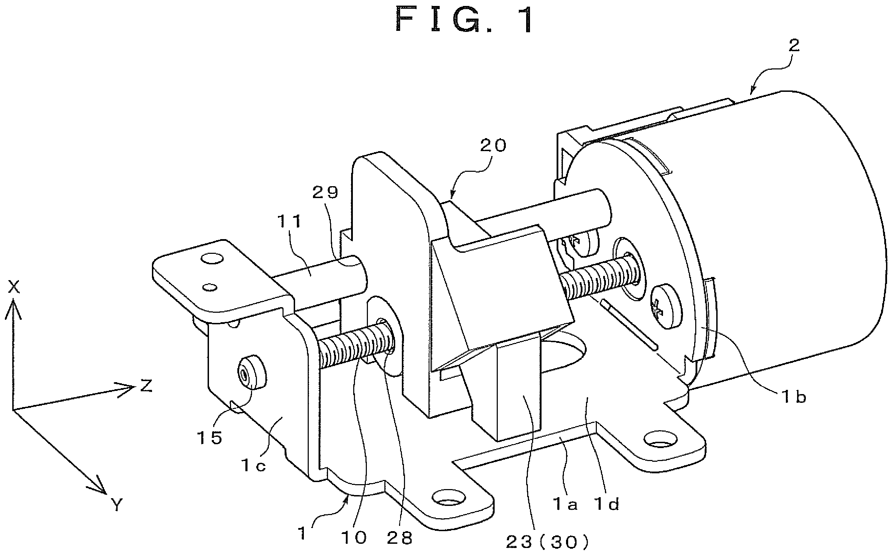

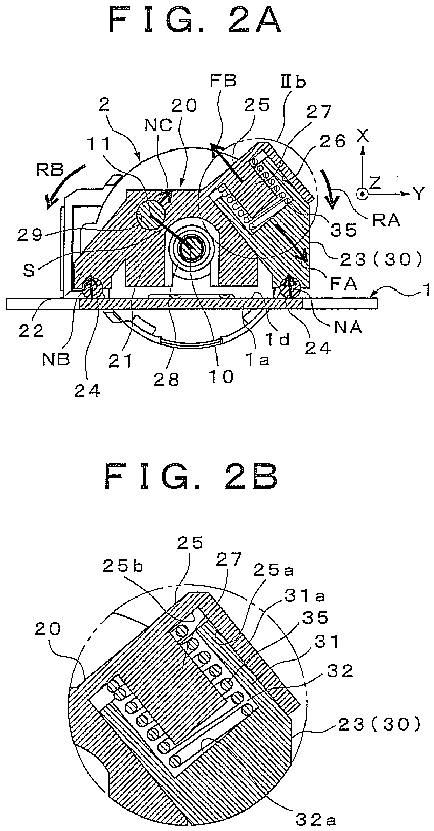

As illustrated in Figure 1 and Figure 2A, a linear drive device includes: a base 1; a step motor 2 attached to the base 1; a lead screw 10 that is rotationally driven by the step motor 2; a guide shaft 11 that is disposed in parallel to the lead screw 10 at a position eccentric from the lead screw 10; and a slider 20 that includes a guide hole 29 through which the guide shaft 11 penetrates and a nut 28 to which the lead screw 10 is screwed. The slider 20 linearly moves along the axis direction of the lead screw 10 and the guide shaft 11 by being guided by the guide shaft 11 in a movement direction through rotation of the lead screw 10 around the axis while being prevented from rotating around the axis of the lead screw 10.

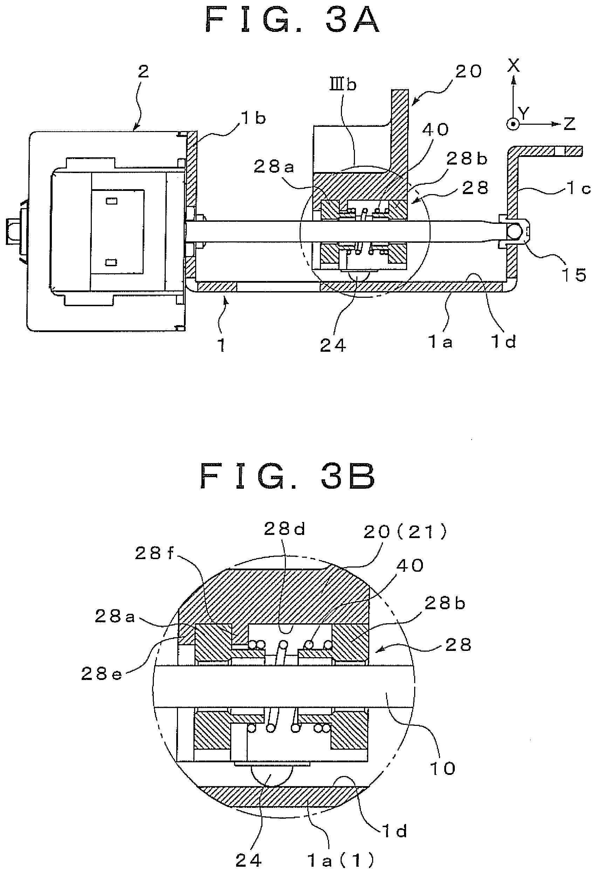

As illustrated in Figure 1 and Figure 3A, the base 1 includes flanges 1b and 1c that are respectively provided by bending at a proximal end and a distal end, in a longitudinal direction, of a belt-like base body 1a. The step motor 2 is fixed to an outside of the flange 1b on the proximal end of the base 1. A top surface of the base body la is a traveling surface 1d that is parallel to the axis direction of the lead screw 10 and the guide shaft 11.

Further, the lead screw 10 is integrally provided on extension of a rotary shaft of the step motor 2, and a distal end of the lead screw 10 is rotatably supported by the flange 1c at the distal end of the base 1 through a radial-thrust bearing 15. Moreover, the guide shaft 11 is disposed at an obliquely upward position that is eccentric from the lead screw 10, and both ends of the guide shaft 11 are respectively fixed to the flange 1b at the proximal end of the base 1 and the flange 1c at the distal end of the base 1.

In this case, the following description is given assuming that a direction perpendicular to the traveling surface 1d in a plane perpendicular to the axis direction of the lead screw 10 and the guide shaft 11 is an X direction, a direction parallel to the traveling surface 1d in that plane is a Y direction, and a direction perpendicular to the X direction and the Y direction, namely, the axis direction of the lead screw 10 and the guide shaft 11 is a Z direction.

Since the guide shaft 11 is disposed obliquely upward of the lead screw 10, a line segment S that connects a center axis of the lead screw 10 and a center axis of the guide shaft 11 is inclined by about 30 degrees to 60 degrees from the Y direction, in an X-Y plane. In other words, the above-described line segment S is not parallel to the Y direction, and the respective positions of the lead screw 10 and the guide shaft 11 with respect to the traveling surface 1d are determined to positions satisfying the condition.

As illustrated in Figure 2A and Figure 2B, a first preload spring (biasing means) 35 that applies rotational biasing force along a circumferential direction with the lead screw 10 as a center, is incorporated in the slider 20. In addition, a steel ball (rolling element) 24 that is travelable along a surface direction of the traveling surface 1d is provided between the traveling surface 1d of the base 1 and the slider 20. The steel ball 24 is mounted to be rollable in all directions along the surface direction of the traveling surface 1d, and has a function of transmitting, to the traveling surface 1d, the rotational biasing force that is applied to the slider 20 by the first preload spring 35, and receiving reactive force of the rotational biasing force.

The slider 20 is divided into a slider body 21 and a movable member 30. The slider body 21 includes the nut 28 to which the lead screw 10 is screwed and a guide hole 29 through which the guide shaft 11 penetrates. The movable member 30 is relatively displaceable in the circumferential direction or a tangential direction of the circumference with respect to the slider body 21. Two leg parts 22 and 23 are provided in the slider 20 at positions sandwiching the lead screw 10 in the Y direction. The one leg part 22 of the slider 20 is provided in the slider body 21, and the other leg part 23 of the slider 20 is provided in the movable member 30. In addition, the steel ball 24 rotatable in all directions is mounted at a lower end of each of the leg parts 22 and 23.

A cylinder 25 is provided at a shoulder part on the side opposite to the side provided with the guide shaft 11 of the slider body 21. In addition, a piston 31 corresponding to the cylinder 25 is provided in the movable member 30. Further, the piston 31 is so assembled to the cylinder 25 as to be slidable in the tangential direction of the circumference with the lead screw 10 as a center. In other words, an outer peripheral surface 31a of the piston 31 is slidably fitted to an inner peripheral surface 25a of the cylinder 25. The tangential direction in this case is set to an angle close to 45 degrees obliquely to the X direction and the Y direction.

A spring housing space 32 is provided inside the piston 31, and a columnar portion 27 projected from an inner bottom part 25b of the cylinder 25 is inserted into the spring housing space 32 with an annular gap therebetween. Further, the first preload spring 35 that is configured of a compression coil spring is housed in the annular gap. The both ends of the first preload spring 35 respectively depress the inner bottom part 25b of the cylinder 25 and an inner bottom part of the spring housing space 32 of the piston 31, which causes the cylinder 25 and the piston 31 to be biased respectively with force FA and FB in a separating direction. The cylinder 25 and the piston 31 are biased respectively with the force FA and FB in such a manner, which applies, to the slider body 21 and the movable member 30, rotational biasing force with the lead screw 10 as a center as illustrated by arrows RA and RB in Figure 2A.

In addition, as illustrated in Figure 3A and Figure 3B, the nut 28 screwed with the outer periphery of the lead screw 10 includes two split nuts 28a and 28b that are split in the axis direction (Z direction) of the lead screw 10. These split nuts 28a and 28b are fitted to a concave part 28d penetrating through the slider body 21 in the axis direction. The one split nut 28a is sandwiched between holding walls 28e and 28f and is so held as not to move in the axis direction. The holding walls 28e and 28f are projected from an inner wall of the concave part 28d. Further, the other split nut 28b is so housed in the concave part 28d as to be movable in the axis direction.

Further, a second preload spring 40 that is configured of a compression coil spring is interposed between the split nut 28b and one of the split nut 28a and the holding wall 28f. The second preload spring 40 applies, between the two split nuts 28a and 28b, preload to increase an axis direction (Z direction) distance between the split nuts 28a and 28b in the separating direction.

Next, action of the linear drive device including the above-described configuration is described.

In the linear drive device, it is possible to apply, between the slider body 21 and the movable member 30, the rotational biasing force RA and RB along the circumferential direction with the lead screw 10 as a center by the biasing force FA and FB of the first preload spring 35 that is interposed between the cylinder 25 of the slider body 21 and the piston 31 of the movable member 30. Further, it is possible to depress, by the rotational biasing force RA and RB, the steel balls 24 that are respectively mounted on the lower end of the leg part 22 of the slider body 21 and the lower end of the leg part 23 of the movable member 30, with respect to the traveling surface 1d of the base 1. This makes it possible to transmit, to the slider 20, reactive force NA and NB in the direction (X direction) perpendicular to the traveling surface 1d that is received by the steel balls 24 from the traveling surface 1d. This is because the steel balls 24 freely travel on the traveling surface 1d in all directions to guide the movement of the slider 20, which causes only the reactive force in the direction (X direction) perpendicular to the traveling surface 1d to act on the steel ball 24.

In other words, the reactive force NA and NB that acts on the steel ball 24 from the traveling surface 1d, against the rotational biasing force RA and RB applied to the slider body 21 and the movable member 30, is directed in the X direction perpendicular to the traveling surface 1d. Accordingly, as a result, it is possible to suppress, by the reactive force NA and NB in the X direction, the backlash in the X direction at an engaging part between the lead screw 10 and the nut 28 and the backlash in the X direction between the guide shaft 11 and the guide hole 29.

In addition, reactive force NC that acts on the slider body 21 from the guide shaft 11, against the rotational biasing force RA and RB applied to the slider body 21 and the movable member 30, is directed to a direction that has at least a force component of the Y direction orthogonal to the X direction because the line segment S connecting the center of the lead screw 10 and the center of the guide shaft 11 is inclined to the traveling surface 1d along the Y direction (namely, not parallel to the Y direction). Accordingly, it is possible to suppress, by the force component of the Y direction, the backlash in the Y direction at the engaging part between the lead screw 10 and the nut 28 and the backlash in the Y direction between the guide shaft 11 and the guide hole 29.

As described above, since the slider body 21 and the movable member 30 receive the reactive force NA, NB, and NC against the rotational biasing force RA and RB, in both of the X direction and the Y direction, it is possible to suppress the backlash of the slider 20 in the X-Y plane.

In addition, as for the thrust direction (Z direction), the second preload spring 40 applies the preload in the Z direction (axis direction) between the two split nuts 28a and 28b, which makes it possible to slightly move the two split nuts 28a and 28b relatively in the separating direction. This makes it possible to absorb the clearance (backlash) in the Z direction between a male screw of the lead screw 10 and a female screw of the nut 28, and to accordingly suppress the backlash of the slider 20 in the Z direction.

Note that, in the above-described embodiment, the cylinder 25 is provided on the slider body 21 and the piston is provided on the movable member 30. Conversely, the piston may be provided on the slider body 21 and the cylinder may be provided on the movable member 30.

In addition, in the above-described embodiment, the case has been described where the line segment S connecting the center axis of the lead screw 10 and the center axis of the guide shaft 11 is inclined from the traveling surface 1d of the base 1 by about 30 degrees to 60 degrees in the X-Y plane; however, the above-described line segment S may be perpendicular to the Y direction. In other words, the above-described line segment S may be coincident with the X direction.

Moreover, the case where the biasing direction of the cylinder 25 and the piston 31 by the first preload spring 35 is set to the tangential direction of the circumference with the lead screw 10 as a center has been described in the above-described embodiment; however, the biasing direction may be set to a tangential direction of a circumference with the guide shaft 11 as a center. As a result, the rotational biasing force in the circumferential direction with the guide shaft 11 as a center acts on the slider body 21 and the movable member 30.

Furthermore, in the above-described embodiment, the direction in which the second preload spring 40 applies the preload to the two split nuts 28a and 28b is set to the direction in which the two split nuts 28a and 28b are separated from each other; however, the direction may be set to a direction in which the two split nuts 28a and 28b come close to each other by, for example, disposing the preload spring 40 outside the split nut 28b.

### Industrial Applicability

The present invention can provide the linear drive device that makes it possible to reliably prevent occurrence of backlash in the slider linearly moved through rotation of the motor.

### Reference Signs List

- 1: Base
- 1d: Traveling surface
- 2: Step motor
- 10: Lead screw
- 11: Guide shaft
- 20: Slider
- 21: Slider body
- 24: Steel ball (rolling element)
- 25: Cylinder
- 28: Nut
- 28a, 28b: Split nut
- 29: Guide hole
- 30: Movable member
- 31: Piston
- 35: First preload spring (biasing means)
- 40: Second preload spring
- FA,: FB Biasing force
- RA,: RB Rotational biasing force
- NA, NB, NC: Reactive force

## Claims

1. A linear drive device, comprising:
a lead screw (10) that is rotationally driven by a motor (2);
a guide shaft (11) that is disposed in parallel to the lead screw (10) at a position eccentric from the lead screw (10);
a base (1) that includes a traveling surface (1d) parallel to an axis direction of the lead screw (10) and the guide shaft (11), and supports the lead screw (10) and the guide shaft (11); and
a slider (20) that includes a guide hole (29) through which the guide shaft (11) penetrates and a nut (28) to which the lead screw (10) is screwed, and linearly moves along the axis direction of the lead screw (10) and the guide shaft (11) by being guided by the guide shaft (11) in a movement direction through rotation of the lead screw (10) around the axis while being prevented from rotating around the axis of the lead screw (10), wherein
the slider (20) includes biasing means (35) and a rolling element (24), the biasing means (35) applying biasing torque along a circumferential direction with the lead screw (10) or the guide shaft (11) as a center,
**characterized in that** the rolling element (24) being disposed between the traveling surface (1d) of the base (1) and the slider (20) to be traveling along a surface direction of the traveling surface (1d), transmitting, to the traveling surface (1d), the biasing torque applied by the biasing means (35) to the slider (20), and receiving reactive force of the biasing torque,
**in that** the slider (20) is divided into a slider body (21) and a movable member (30), the slider body (21) including the nut (28) to which the lead screw (10) is screwed and the guide hole (29) through which the guide shaft (11) penetrates, and the movable member (30) being relatively displaceable in the circumferential direction or in a tangential direction of the circumference with respect to the slider body (21),
a first preload spring in a compressed state is interposed between the slider body (21) and the movable member (30), as the biasing means (35) biasing the slider body (21) and the movable member (30) in a separating direction, and
the rolling element (24) is mounted on each of the slider body (21) and the movable member (30),
and **in that** a cylinder (25) is provided on one of the slider body (21) and the movable member (30),
a piston (31) is provided on the other of the slider body (21) and the movable member (30),
the piston (31) is assembled to the cylinder (25) to be slidable in the tangential direction, and
the first preload spring is interposed between the cylinder (25) and the piston (31).

2. The linear drive device according to claim 1, wherein
the nut (28) includes two split nuts (28a, 28b) that are split in the axis direction, and
a second preload spring (40) is provided to apply, to one or both of the split nuts (28a, 28b), a preload to adjust an axis direction distance between the two split nuts (28a, 28b).

## Patentansprüche

1. Linearantriebsvorrichtung, umfassend:
eine Leitspindel (10), die von einem Motor (2) drehend angetrieben wird;
eine Führungswelle (11), die parallel zur Leitspindel (10) an einer Position exzentrisch von der Leitspindel (10) angeordnet ist;
eine Basis (1), die eine Lauffläche (1d) parallel zu einer Achsrichtung der Leitspindel (10) und der Führungswelle (11) enthält und die Leitspindel (10) und die Führungswelle (11) trägt; und
einen Gleiter (20), der ein Führungsloch (29) enthält, durch das die Führungswelle (11) hindurchdringt, und eine Mutter (28), an welche die Leitspindel (10) geschraubt ist, und welcher sich linear entlang der Achsrichtung der Leitspindel (10) und der Führungswelle (11) bewegt, indem dieser durch die Führungswelle (11) in einer Bewegungsrichtung durch Drehung der Leitspindel (10) um die Achse geführt wird, während dieser an einer Drehung um die Achse der Leitspindel (10') gehindert wird, wobei
der Gleiter (20) eine Vorspanneinrichtung (35) und ein Wälzelement (24) enthält, wobei die Vorspanneinrichtung (35) ein Vorspanndrehmoment entlang einer Umfangsrichtung mit der Leitspindel (10) oder der Führungswelle (11) als Zentrum aufbringt,
**dadurch gekennzeichnet, dass** das Wälzelement (24) zwischen der Lauffläche (1d) der Basis (1) und dem Gleiter (20) angeordnet ist, um sich entlang einer Oberflächenrichtung der Lauffläche (1d) zu bewegen, wobei es das Vorspanndrehmoment auf die Lauffläche (1d) überträgt, das durch die Vorspanneinheit (35) auf den Gleiter (20) aufgebracht wird, und Reaktionskraft des Vorspanndrehmoments aufnimmt,
dass der Gleiter (20) in einen Gleitkörper (21) und ein bewegliches Element (30) unterteilt ist, wobei der Gleitkörper (21) die Mutter (28), an welche die Leitspindel (10) geschraubt ist, und das Führungsloch (29) enthält, durch welches die Führungswelle (11) hindurchdringt, und wobei das bewegliche Element (30) in der Umfangsrichtung oder in einer tangentialen Richtung des Umfangs relativ zum Gleitkörper (21) verschiebbar ist, wobei
eine erste Vorspannfeder in einem komprimierten Zustand zwischen dem Gleitkörper (21) und dem beweglichen Element (30) angeordnet ist, sowie das Vorspannmittel (35) den Gleitkörper (21) und das bewegliche Element (30) in eine Trennrichtung vorspannt, und wobei
das Wälzelement (24) jeweils an dem Gleitkörper (21) und dem beweglichen Element (30) angebracht ist,
und dass ein Zylinder (25) an einem von dem Gleitkörper (21) und dem beweglichen Element (30) vorgesehen ist, wobei
ein Kolben (31) an der anderen Seite des Gleitkörpers (21) und des beweglichen Elements (30) vorgesehen ist,
der Kolben (31) mit dem Zylinder (25) zusammengebaut ist, um in tangentialer Richtung verschiebbar zu sein, und
die erste Vorspannfeder zwischen dem Zylinder (25) und dem Kolben (31) angeordnet ist.

2. Linearantriebsvorrichtung nach Anspruch 1, wobei
die Mutter (28) zwei geteilte Muttern (28a, 28b) enthält, die in Achsenrichtung geteilt sind, und
eine zweite Vorspannfeder (40) vorgesehen ist, um auf eine oder beide der geteilten Muttern (28a, 28b) eine Vorspannung aufzubringen, um einen Achsenrichtungsabstand zwischen den beiden geteilten Muttern (28a, 28b) einzustellen.

## Revendications

1. Dispositif d'entraînement linéaire, comprenant:
une vis-mère (10) qui est entraînée en rotation par un moteur (2) ;
un arbre de guidage (11) qui est disposé parallèlement à la vis-mère (10) dans une position excentrée par rapport à la vis-mère (10) ;
une base (1) qui comprend une surface de déplacement (1d) parallèle à une direction d'axe de la vis-mère (10) et de l'arbre de guidage (11), et qui supporte la vis-mère (10) et l'arbre de guidage (11) ; et
un coulisseau (20) qui comprend un trou de guidage (29) à travers lequel l'arbre de guidage (11) pénètre et un écrou (28) auquel la vis-mère (10) est vissée, et qui se déplace linéairement le long de la direction de l'axe de la vis-mère (10) et de l'arbre de guidage (11) en étant guidé par l'arbre de guidage (11) dans une direction de mouvement par rotation de la vis-mère (10) autour de l'axe tout bloquant sa rotation autour de l'axe de la vis-mère (10), dans lequel
le coulisseau (20) comprend des moyens de sollicitation (35) et un élément de roulement (24), les moyens de sollicitation (35) appliquant un couple de sollicitation le long d'une direction circonférentielle avec soit la vis-mère (10) ou soit l'arbre de guidage (11) comme centre,
**caractérisé en ce que** l'élément de roulement (24) est disposé entre la surface de déplacement (1d) de la base (1) et le coulisseau (20) pour se déplacer le long d'une direction de surface de la surface de déplacement (1d), transmettant, à la surface de déplacement (1d), le couple de sollicitation appliqué par le moyen de sollicitation (35) au coulisseau (20), et recevant la force réactive du couple de sollicitation,
**en ce que** le coulisseau (20) est divisé en un corps de coulisseau (21) et un élément mobile (30), le corps de coulisseau (21) comprenant l'écrou (28) auquel la vis-mère (10) est vissée et le trou de guidage (29) à travers lequel l'arbre de guidage (11) pénètre, et l'élément mobile (30) étant relativement déplaçable dans la direction circonférentielle ou dans une direction tangentielle de la circonférence par rapport au corps de coulisseau (21),
un premier ressort de précharge à l'état comprimé est interposé entre le corps de coulisseau (21) et l'élément mobile (30), en tant que moyen de sollicitation (35) sollicitant le corps de coulisseau (21) et l'élément mobile (30) dans une direction de séparation, et
l'élément de roulement (24) est monté sur chacun du corps de coulisseau (21) et de l'élément mobile (30),
et **en ce qu'**un cylindre (25) est prévu sur l'un du corps de coulisseau (21) et de l'élément mobile (30),
un piston (31) est prévu sur l'autre du corps de coulisseau (21) et de l'élément mobile (30),
le piston (31) est assemblé au cylindre (25) pour pouvoir coulisser dans la direction tangentielle, et
le premier ressort de précharge est interposé entre le cylindre (25) et le piston (31).

2. Dispositif d'entraînement linéaire selon la revendication 1, dans lequel
l'écrou (28) comprend deux écrous fendus (28a, 28b) qui sont fendus dans la direction de l'axe, et
un second ressort de précharge (40) est prévu pour appliquer, à l'un ou aux deux écrous fendus (28a, 28b), une précharge pour ajuster une distance dans la direction de l'axe entre les deux écrous fendus (28a, 28b).
